# EUROPÄISCHE PATENTSCHRIFT

(11) **EP 0 573 011 B1**
(45) Veröffentlichungstag und Bekanntmachung des Hinweises auf die Patenterteilung: **27.09.1995**
(21) Anmeldenummer: 93108871.0
(22) Anmeldetag: 02.06.1993
(51) Int. Cl.: B62L 5/04

(54) **Rücktritt-Bremsnabe**
Back pedal brake hub
Moyeu de frein à contre-pédalage

(30) Priorität: 04.06.1992 DE 4218409
(43) Veröffentlichungstag der Anmeldung: 08.12.1993
(73) Patentinhaber: FICHTEL & SACHS AG, D-97424 Schweinfurt (DE)
(72) Erfinder: Bergles, Eduard, A-8041 Graz (AT)
(74) Vertreter: Prechtel, Jörg, Dipl.-Phys. Dr.

(56) Entgegenhaltungen:
- DE-A- 3 930 374
- DE-C- 649 344

## Beschreibung

Die vorliegende Erfindung bezieht sich auf eine Rücktrittbremse für Rücktritt-Bremsnaben, insbesondere für Fahrräder, wie sie im Oberbegriff des Anspruchs 1 angegeben ist.

Bei derartigen Rücktrittbremsen wird die Bremswirkung dadurch erreicht, daß bei einer Betätigung der Fahrradpedale bzw. der Pedalarme in zur Antriebsrichtung entgegengesetzter Richtung ein Drehelement, z.B. ein Planetenradträger, in zur normalen Antriebsrichtung entgegengesetzter Richtung gedreht wird, und ein das Drehelement umgebender Bremskonus wird durch Zusammenwirken mit einem auf dem Drehelement vorgesehenen Steilgewinde in axialer Richtung der Nabenachse auf einen Bremsmantel zu verschoben. Um diese axiale Verschiebung des Bremskonus zu ermöglichen, ist eine zwischen dem Bremskonus und dem Bremsmantel wirkende Friktionsfeder vorgesehen, welche bei Betätigung der Rücktrittbremse eine hohe Reibungskraft zwischen dem Bremskonus und dem Bremsmantel erzeugt, so daß der Bremsmantel sich nicht mit dem Drehelement mitdrehen kann, und durch die Krafteinwirkung des Steilgewindes axial verschoben wird. Im nicht betätigten Zustand der Rücktrittbremse entwickelt die Friktionsfeder im wesentlichen keine Reibungskraft zwischen dem Bremskonus und dem Bremsmantel.

Die Friktionsfeder und die bei Betätigung der Rücktrittbremse aneinander anliegenden Konusflächen des Bremskonus und des Bremsmantels, durch welche die zwischen dem die Nabe umgebenden Nabenmantel und dem Bremsmantel zum Abbremsen des Fahrrads wirkende Reibungskraft erzeugt wird, legen den Bremskonus bezüglich des Bremsmantels bei Betätigung der Rücktrittbremse drehfest.

Bei derartigen Rücktrittbremsen besteht jedoch das Problem, daß zumindest bei länger andauernden Bremsvorgängen das durch die Pedale auf den Bremskonus übertragene Bremsdrehmoment dazu führen, daß dieser sich in zur Drehrichtung des Hinterrads entgegengesetzter Richtung bezüglich des Bremsmantels dreht. Dies kann z.B. durch die bei Bremsvorgängen entstehende Wärme hervorgerufen werden, da diese im Bereich des Bremsmantels und des Hebelkonus konzentrierte Wärme zu einer thermischen Ausdehnung der einzelnen Bauelemente führen kann. Bei kürzeren Bremsvorgängen oder bei längeren Bremsvorgängen, welche mehrfach unterbrochen werden, ist es möglich, daß diese relative Verdrehung des Bremskonus gegenüber dem Bremsmantel vom Radfahrer nicht zur Kenntnis genommen wird, da sie durch den Radfahrer jeweils beim erneuten Einleiten des Bremsvorgangs unbewußt korrigiert wird. Bei länger anhaltenden Bremsvorgängen, z.B. beim Bergabfahren, oder bei sehr starkem Abbremsen führt jedoch die Drehung des Bremskonus bezüglich des Bremsmantels dazu, daß die vom Fahrradfahrer zum Beginn des Bremsvorgangs in einer optimalen, d.h. im wesentlichen horizontalen Stellung angeordneten Pedalarme sich derart verdrehen, daß das hintere Pedal, auf welches die Bremskraft ausgeübt wird, sich nach unten bewegt. Somit wird das vom Radfahrer ausgeübte, effektive Bremsdrehmoment zunehmend kleiner, wodurch auch die Bremswirkung der Rücktrittbremse abnimmt. Durch die anhaltende Rückwärtsdrehbewegung der Pedale entsteht für den Radfahrer das Gefühl, daß die Rücktrittbremse nicht mehr ordnungsgemäß funktioniert, was beim Radfahrer, insbesondere beim Bergabfahren, Unsicherheit auslösen kann.

Demgegenüber ist es die Aufgabe der vorliegenden Erfindung, eine Rücktrittbremse für eine Rücktritt-Bremsnabe vorzusehen, bei welcher beim Bremsen zuverlässig verhindert wird, daß nach dem Einleiten des Bremsvorgangs eine merkliche Relativdrehung zwischen Bremskonus und Bremsmantel auftritt, so daß unter allen Umständen die volle Bremswirkung zur Verfügung steht.

Erfindungsgemäß wird die Aufgabe durch das Kennzeichen des Anspruchs 1 gelöst. Wenn bei Betätigung der Rücktrittbremse der Bremskonus bezüglich des Hebelkonus und somit bezüglich des Bremsmantels drehfest gelegt ist, wird verhindert, daß auch dann, wenn die auf Pedale ausgeübte Bremskraft die Summe der zwischen den ersten und zweiten Konusflächen des Bremsmantels und des Bremskonus entwickelten Reibungskraft und der von der Friktionsfeder erzeugten Reibungskraft überschreitet, eine Relativdrehung zwischen dem Bremskonus und dem Bremsmantel auftritt. Somit bleiben die Fahrradpedale, insbesondere das Fahrradpedal, durch welches die Bremskraft ausgeübt wird, in ihrer beim Einleiten des Bremsvorgangs eingenommenen Stellung. Da der Fahrradfahrer die Pedale beim Einleiten des Bremsvorgangs derart anordnet, daß die erzeugte Bremswirkung maximal wird, bleibt somit während des gesamten Bremsvorgangs diese durch den Radfahrer ausgeübte maximale Bremskraft erhalten. Ein durch den Radfahrer vorzunehmendes Lösen und Nachkorrigieren der Stellung der Pedale ist somit nicht mehr erforderlich, so daß z.B. insbesondere bei langen oder sehr starken Bremsvorgängen durch diese erfindungsgemäße Rücktrittbremse eine optimale Bremswirkung vorgesehen wird. Durch das Verhindern einer Relativdrehung zwischen Bremskonus und Bremsmantel wird zusätzlich verhindert, daß durch bei einer Relativbewegung zwischen Bremskonus und Bremsmantel erzeugtem Abrieb die Bremswirkung abnimmt.

Bevorzugterweise umfaßt das Kupplungselement eine Kupplungsscheibe, die mit einer Verzahnung versehen ist, wobei am Bremskonus eine dieser Verzahnung zugeordnete Gegenverzahnung vorgesehen ist. Das Ineinandergreifen der Verzahnung und der Gegenverzahnung bei Betätigung der Rücktrittbremse stellt sicher, daß bei sehr hohem Bremsdrehmoment der Bremskonus gegenüber dem Hebelkonus bzw. dem Bremsmantel drehfest gelegt ist.

Um sicherzustellen, daß unabhängig von der momentanen Drehstellung der Kupplungsscheibe bezüglich des Bremskonus bei Betätigung der Rücktrittbremse immer ein Eingreifen der Verzahnung mit der Gegenverzahnung erreicht wird, wird vorgeschlagen, daß die Kupplungsscheibe in einer zur Längsrichtung der Nabenachse parallelen Ausweichrichtung entgegen der rücktreibenden Kraft eines Federelements verschiebbar ist. Es ist somit möglich, daß, wenn sich bei Betätigung der Rücktrittbremse der Bremskonus auf die Kupplungsscheibe zubewegt, und die relative Drehstellung der beiden Elemente derart ist, daß jeweils die Scheitellinien der Zähne der Verzahnung und der Gegenverzahnung aneinander zu liegen kommen, die Kupplungsscheibe vom Bremskonus in axialer Richtung mitgenommen wird, wobei bei der weitergehenden Drehbewegung des Bremskonus sich die Zähne der Verzahnung und der Gegenverzahnung relativ zueinander verdrehen, so daß durch die Krafteinwirkung des Federelements und die anhaltende Relativdrehung zwischen Bremskonus und Kupplungsscheibe die Verzahnung und die Gegenverzahnung in Eingriff gebracht werden.

Dabei ist es bevorzugt, daß die Kupplungsscheibe durch eine Feder axial gegen einen Anschlag in Richtung auf den Bremskonus zu vorgespannt ist. Derartige Federn sind gegen in der Nabe vorgesehene Schmiermittel zum Schmieren der beweglichen Teile resistent und verlieren auch bei häufiger mechanischer Belastung nicht ihre Federwirkung, so daß auch nach langem Betrieb der Nabe eine korrekte Funktion der erfindungsgemäßen Rücktrittbremse sichergestellt ist.

Wenn der Anschlag eine im wesentlichen konische Anschlagfläche aufweist ist sichergestellt, daß im nicht betätigten Zustand der Rücktrittbremse die Kupplungsscheibe auf dem Anschlag selbstzentrierend gehalten ist, so daß jegliche Unwucht oder ein Taumelschlag in der Nabe vermieden wird und die Verzahnung und die Gegenverzahnung beim nachfolgenden Bremsvorgang geeignet ineinandergreifen können.

Um ein unmittelbar auf einen Bremsvorgang folgendes Betätigen der Fahrradpedale in Antriebsrichtung ohne Beeinträchtigung durch die ineinandergreifenden Zähne der Verzahnung und der Gegenverzahnung zu ermöglichen, wird vorgeschlagen, daß die Zähne der Verzahnung an der Kupplungsscheibe und der Gegenverzahnung am Bremskonus im Bremszustand der Rücktrittbremse die Verdrehung des Bremskonus in zur Drehrichtung des Hinterrads entgegengesetzter Drehrichtung verhindern, während die Bewegung des Bremskonus in Fahrdrehrichtung des Hinterrads durch die Verzahnungen nicht behindert ist.

Dabei ist es bevorzugt, daß die Zähne der Verzahnung und/oder die Zähne der Gegenverzahnung sägezahnartig ausgebildet sind, so daß diese nur in einer Drehrichtung relativ zueinander die Drehbewegung des Bremskonus behindern. In der entgegengesetzten Drehrichtung können die langen Flanken der sägezahnartig ausgebildeten Zähne jeweils an den entsprechenden Zähnen der Verzahnung und/oder Gegenverzahnung abgleiten, so daß in dieser Drehrichtung im wesentlichen keine Behinderung der Drehbewegung des Bremskonus gegeben ist.

Um sicherzustellen, daß zum einen die optimale Bremswirkung der Rücktrittbremse so früh wie möglich eintritt, und daß zum anderen unabhängig von der momentanen Drehstellung des Bremskonus bezüglich der Kupplungsscheibe die Zähne der Gegenverzahnung und der Verzahnung bei Betätigung der Rücktrittbremse immer in Eingriff gebracht werden können, wird vorgeschlagen, daß die Gegenverzahnung am Bremskonus und die Verzahnung auf der Kupplungsscheibe bereits ineinandergreifen, bevor der Bremskonus den Bremsmantel gegen die Nabenhülse drückt. Es ist somit sichergestellt, daß bei Betätigung der Rücktrittbremse die axiale Bewegung des Bremskonus durch die Relativbewegung der ersten und zweiten Konusflächen zueinander nicht behindert wird, bevor die Zähne der Verzahnung und die Zähne der Gegenverzahnung sich zueinander derart verdreht haben, daß sie ineinandergreifen können.

Besonders einfach und platzsparend ist der Aufbau der erfindungsgemäßen Rücktrittbremse, wenn die Verzahnung und die Gegenverzahnung in einem zwischen der Nabenachse und dem Bremsmantel gebildeten Ringraum angeordnet sind.

Um die Kupplungsscheibe derart anzuordnen, daß sie bezüglich der Nabenachse bzw. dem Hebelkonus nicht drehbar ist, wird vorgeschlagen, daß die drehfeste Verbindung zwischen der Kupplungsscheibe und dem Hebelkonus durch ein Kupplungsprofil auf der Kupplungsscheibe gebildet ist, in das wenigstens eine Nase des Bremsmantels eingreift, wobei die wenigstens eine Nase ferner mit entsprechenden Klauen am Hebelkonus zusammenwirkt. Somit wird die Kupplungsscheibe durch die am Bremsmantel ohnehin vorhandenen Nasen bezüglich des Hebelkonus drehfest gelegt, so daß keine zusätzlichen Mittel erforderlich sind, wodurch der Aufbau der erfindungsgemäßen Rücktrittbremse vereinfacht wird, und somit die Herstellungskosten verringert werden können.

Alternativ dazu ist es möglich, die drehfeste Verbindung zwischen der Kupplungsscheibe und dem Hebelkonus durch eine Längsverzahnung auf der Kupplungsscheibe und eine am Hebelkonus vorgesehene Längsverzahnung zu bilden. Auch in diesem Fall ist das Anordnen zusätzlicher Mittel zum drehfesten Anordnen der Kupplungsscheibe innerhalb der Nabe nicht erforderlich. Da in dieser Ausführungsform die Kupplungsscheibe direkt mit dem Hebelkonus und somit mit dem Fahrradrahmen drehfest verbunden ist, sieht diese Ausführungsform eine besonders stabile Ausgestaltung der erfindungsgemäßen Rücktrittbremse vor.

Dabei ist es bevorzugt, daß die Längsverzahnung des Hebelkonus an sich im wesentlichen axial erstreckenden Klauen des Hebelkonus vorgesehen ist. Derartige Klauen sind z.B. zur drehfesten Verbindung des Hebelkonus mit dem Bremsmantel vorgesehen, und können somit in einfacher Weise zusätzlich zur drehfesten Verbindung des Hebelkonus mit der Kupplungsscheibe verwendet werden.

Eine weitere Möglichkeit, die drehfeste Verbindung zwischen der Kupplungsscheibe und dem Hebelkonus vorzusehen, ist durch ein Formprofil gegeben, beispielsweise durch einen Zweiflach, der auf der Nabenachse gebildet ist und mit einer entsprechend geformten Öffnung in der Kupplungsscheibe zusammenwirkt. Auch in dieser Ausführungsform ist die Kupplungsscheibe bei einfacher Montagemöglichkeit direkt mit der Nabenachse und somit mit dem Fahrradrahmen verbunden, so daß wiederum eine stabile Ausgestaltung der erfindungsgemäßen Rücktrittbremse vorgesehen ist.

Die Erfindung wird nachfolgend anhand in den Figuren dargestellter Ausführungsformen datailliert beschrieben.
Es zeigt:
- Fig. 1: eine Längsschnittansicht einer erfindungsgemäßen Rücktritt-Bremsnabe;
- Fig. 2: einen vergrößerten Ausschnitt des Längsschnitts in Fig. 1, worin insbesondere der Rücktritt-Bremsenbereich der erfindungsgemäßen Rücktritt-Bremsnabe dargestellt ist;
- Fig. 3: eine der Fig. 2 entsprechende Ansicht einer zweiten Ausführungsform der erfindungsgemäßen Rücktritt-Bremsnabe;
- Fig. 4: eine Seitenansicht der Verzahnung auf der Kupplungsscheibe und der Gegenverzahnung auf dem Bremskonus; und
- Fig. 5: eine der Fig. 2 entsprechende Ansicht einer dritten Ausführungsform der erfindungsgemäßen Rücktritt-Bremsnabe.

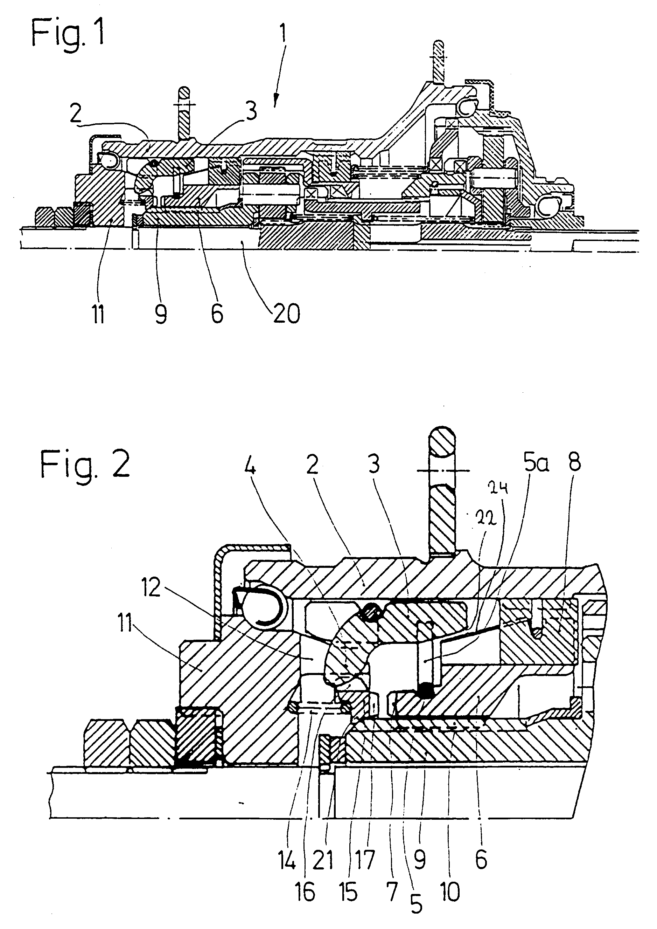

Eine in den Figuren dargestellte Rücktritt-Bremsnabe ist allgemein mit 1 bezeichnet. Die insbesondere in Fig. 1 dargestellte Rücktritt-Bremsnabe ist eine Sechs-Gang-Antriebsnabe; die vorliegende Erfindung kann jedoch ebenso in jeder Rücktritt-Bremsnabe mit einer anderen Anzahl an Gängen verwendet werden.

Die Rücktritt-Bremsnabe umfaßt eine Nabenachse 20, auf welcher ein Drehelement 9, z.B. ein Planetenradträger, drehbar angeordnet ist. An einem Endabschnitt des Drehelements 9 ist ein diesen Endabschnitt umgebender Bremskonus 6 angeordnet und ist in einem Steilgewinde 10 auf dem Drehelement 9 in einer Längsrichtung bzw. Achsrichtung der Nabenachse 20 axial verschiebbar geführt. Im Antriebszustand der Rücktritt-Bremsnabe 1 überträgt in wenigstens einer der Gangstellungen der Bremskonus 6 über Klinken 8 die Antriebskraft auf einen Nabenmantel 2.

Ferner ist ein die Nabenachse 20 umgebender Hebelkonus 11 vorgesehen, welcher bezüglich der Nabenachse 20 und des Fahrradrahmens (nicht dargestellt) drehfest angeordnet ist. Mit dem Hebelkonus 11 ist ein Bremsmantel 3 innerhalb des Nabenmantels 2 durch wenigstens eine Nase 4 drehfest verbunden, welche zwischen entsprechenden Klauen 12,12a am Hebelkonus gegen Drehbewegungen festgelegt ist. Der Bremsmantel 3 liegt in an sich bekannter Weise mit einer äußeren Umfangsfläche am Nabenmantel 2 an und weist an einer inneren Umfangsfläche eine sich konisch verjüngende, radial nach innen weisende erste Konusfläche 22 auf.

Am Bremskonus 6 ist in an sich bekannter Weise eine zweite sich konusartig verjüngende und radial nach außen weisende Konusfläche 24 vorgesehen. Ferner ist eine zwischen dem Bremskonus 6 und dem Bremsmantel 3 angeordnete Friktionsfeder 5 vorgesehen. Die Friktionsfeder 5 kann, wie an sich bekannt, als Schlingfeder ausgeführt sein, welche mit einem aufgebogenen, in Fahrtrichtung zeigenden Ende 5a in eine Lücke des Bremsmantels 3 eingreift. Somit wird bei antreibender Betätigung der Rücktritt-Bremsnabe die Friktionsfeder 5 zwar festgehalten, wird durch die Kraftwirkung am aufgebogenen Ende 5a jedoch geöffnet, so daß sie zwischen dem Bremsmantel 3 und dem Bremskonus 6 im wesentlichen keine Kraftkopplung erzeugt. Wird hingegen die Rücktritt-Bremsnabe zur Betätigung der Rücktrittbremse betätigt, verursacht die relative Drehung zwischen dem Bremskonus und dem Bremsmantel 3 ein Zusammenziehen der Friktionsfeder 5, welche sich somit durch den Schlingfedereffekt auf dem Bremskonus 6 festzieht und diesen im wesentlichen gegen eine weitere Drehbewegung festlegt und nur noch eine axiale Bewegung des Bremskonus 6 zuläßt.

Der somit bei Betätigung der Rücktrittbremse am Drehen gehinderte Bremskonus 6 wird durch das Steilgewinde 10 in axialer Richtung auf den Hebelkonus 11 zu verschoben, so daß durch gegenseitiges Verschieben der ersten und zweiten Konusflächen 22,24 zueinander der Bremsmantel nach außen gegen den Nabenmantel 2 gedrückt wird und somit die zum Abbremsen des Fahrrads erforderliche Reibungskraft erzeugt wird.

Wie in Fig. 2 dargestellt, ist in der Bremsnabe ferner eine Kupplungsscheibe 15 angeordnet, welche die Nabenachse 20 im wesentlichen konzentrisch umgibt. Die Kupplungsscheibe 15 ist in Längsrichtung der Nabenachse 20 verschiebbar angeordnet und ist durch eine Druckfeder 14, welche zwischen der Kupplungsscheibe 15 und dem Hebelkonus 11 wirkt, in Richtung auf den Bremskonus zu vorgespannt.

Dabei liegt die Kupplungsscheibe 15 an einem im wesentlichen konisch ausgebildeten Anschlag 21 auf dem Drehelement 9 an, so daß durch den konischen Anschlag 21 die Kupplungsscheibe 15 selbstzentrierend konzentrisch zur Nabenachse 20 gehalten ist.

An einer Außenumfangsfläche der Kupplungsscheibe 15 ist ein Kupplungsprofil 16 vorgesehen, in welches die wenigstens eine Nase 4 des Bremsmantels 3 eingreift. Die Kupplungsscheibe 15 ist somit über die wenigstens eine Nase 4 des Bremsmantels 3, welche gleichfalls zwischen den Klauen 12 und 12a des Hebelkonus 2 gehalten ist, bezüglich des Hebelkonus 11 drehfest angeordnet, ist jedoch in axialer Richtung gegen die Kraftwirkung der Druckfeder 14 bewegbar.

An einer dem Bremskonus 6 zugewandten Stirnfläche der Kupplungsscheibe 15 ist eine Verzahnung 17 vorgesehen, und an einer entsprechenden Stirnfläche auf dem Bremskonus 6 ist eine Gegenverzahnung 7 vorgesehen. Bei Betätigung der Rücktrittbremse und dadurch verursachtem Verschieben des Bremskonus 6 in Richtung auf den Hebelkonus 11 und somit auf die Kupplungsscheibe 15 zu, kommen die Zähne der Verzahnung 17 und die Zähne der Gegenverzahnung 7 in Eingriff und verhindern somit, daß sich der Bremskonus 6 in zur Fahrdrehrichtung des Hinterrads entgegengesetzter Richtung bezüglich des Hebelkonus 11 dreht.

Durch das Vorsehen der Druckfeder 14, welche ein Ausweichen der Kupplungsscheibe 15 in Richtung auf den Hebelkonus 11 zu ermöglicht, ist sichergestellt, daß dann, wenn z.B. die Scheitellinien 29 der Zähne der Verzahnung 17 und der Zähne der Gegenverzahnung 7 bei Betätigung der Rücktrittbremse aufeinander zu liegen kommen, die Kupplungsscheibe zunächst axial vom Bremskonus 6 mitgenommen wird, und bei einer durch das Steilgewinde 10 verursachten, geringfügig weitergehenden Verdrehung des Bremskonus 6 verschieben sich die Verzahnung 17 und die Gegenverzahnung 7 in Drehrichtung relativ zueinander, so daß dann durch die Wirkung der Druckfeder 14 die Verzahnung 17 und die Gegenverzahnung 7 in Eingriff gebracht werden.

Bevorzugterweise ist die axiale Anordnung der Kupplungsscheibe bezüglich des Bremskonus 6 derart ausgelegt, daß die Verzahnung 17 und die Gegenverzahnung 7 bereits ineinander eingreifen, bevor die ersten und zweiten Konusflächen des Bremsmantels und des Bremskonus zu Anlage aneinander kommen und dabei eine weitere axiale Verschiebung des Bremskonus 6 im wesentlichen nicht zulassen würden.

Es ist somit sichergestellt, daß unmittelbar bei Betätigung der Rücktrittbremse und bereits vor dem Aufbau der zum Abbremsen des Fahrrads erforderlichen Reibungskraft zwischen dem Bremsmantel 3 und dem Nabenmantel 2 der Bremskonus 6 durch die ineinandergreifenden Verzahnungen 17 und 7 an der Kupplungsscheibe 15 und am Bremskonus 6 bezüglich des Hebelkonus 11 drehfest gelegt ist. Somit sind auch die Pedale bzw. die Pedalarme (beide nicht dargestellt), auf welche der Radfahrer die Bremskraft ausübt, gegen Drehbewegung in Bremsrichtung festgelegt, so daß diese exakt in der durch den Radfahrer zum Bremsen ausgewählten optimalen, im wesentlichen horizontalen Stellung angeordnet bleiben und somit eine maximale Bremswirkung ermöglichen.

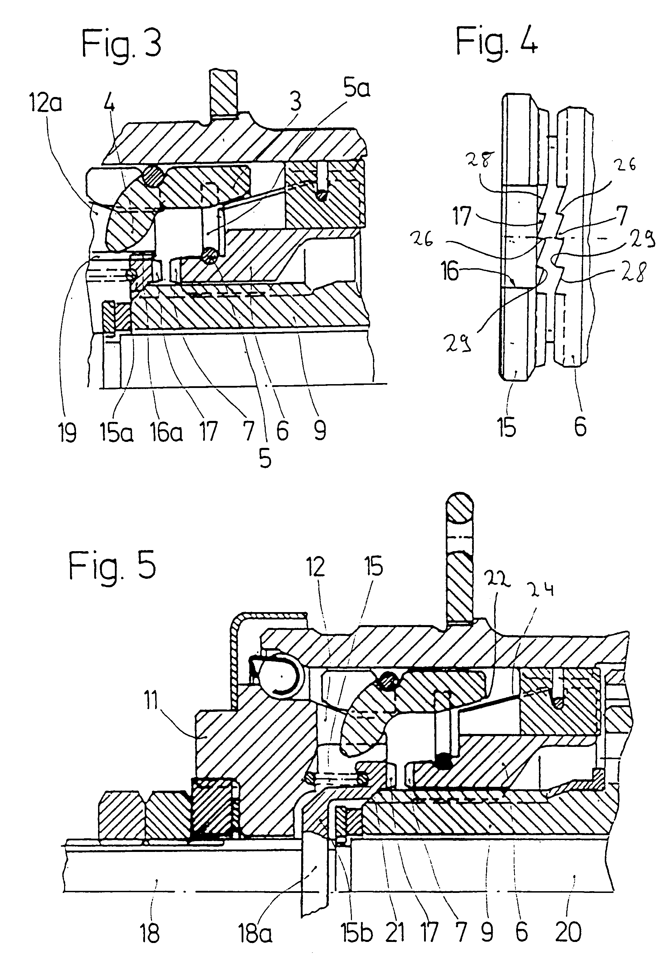

Wie insbesondere in Fig. 4 dargestellt, sind die Zähne der Verzahnung 17 und der Gegenverzahnung 7 sägezahnartig ausgebildet, wobei die steil abfallenden Flanken 26 der jeweiligen Zähne aneinander anliegen und die Arretierung des Bremskonus 6 sicherstellen, wenn die Verzahnung 17 und die Gegenverzahnung bei Betätigung der Rücktrittbremse ineinander eingreifen. Wird unmittelbar nach Betätigung der Rücktrittbremse wieder ein antreibendes Drehmoment auf die Pedale und somit die Antriebsnabe ausgeübt, gleiten die Zähne der Verzahnung 17 und die Zähne der Gegenverzahnung 7 an ihren jeweils flach abfallenden Flanken 28 aufgrund der dann unmittelbar einsetzenden Drehbewegung des Bremskonus in Antriebsrichtung aneinander ab mit gleichzeitigem Verschieben der Kupplungsscheibe 15 entgegen der Krafteinwirkung der Druckfeder 14, so daß die mit ihren flachen Flanken 28 aneinander abgleitenden Zähne die Antriebsdrehbewegung des Bremskonus 6 nicht behindern.

In Fig. 3 ist eine zweite Ausführungsform der erfindungsgemäßen Rücktritt-Bremsnabe dargestellt, bei welcher eine andere Art der drehfesten Verbindung der Kupplungsscheibe 15a mit dem Hebelkonus 11 realisiert ist. In dieser Ausführungsform ist an der Außenumfangsfläche der Kupplungsschiebe 15a eine Längsverzahnung 16a vorgesehen, in welche eine Längsverzahnung 19 eingreift. Die Längsverzahnung 19 ist an einer Innenumfangsfläche der am Hebelkonus 11 zum Festlegen der Nase 4 des Bremsmantels 3 vorgesehenen Klauen 12 und 12a angeordnet. In dieser Ausführungsform ist die Kupplungsscheibe 15a somit ohne Zwischenwirkung des Bremsmantels 3 direkt mit Hebelkonus 11 verbunden, wodurch ein besonders stabiler Aufbau der erfindungsgemäßen Rücktritt-Bremsnabe erreicht wird. Der restliche Aufbau der in Fig. 3 dargestellten Rücktritt-Bremsnabe entspricht dem Aufbau der in den Fig. 1 und 2 dargestellten Rücktritt-Bremsnabe.

Eine dritte Ausführungsform der erfindungsgemäßen Rücktritt-Bremsnabe ist in Fig. 5 dargestellt. In dieser Ausführungsform weist die Kupplungsscheibe 15b eine zentrale Zweiflachbohrung 18a auf, mit welcher sie auf einen entsprechenden Zweiflachabschnitt 18 der Nabenachse 20 aufgeschoben und gelagert ist. Die Kupplungsscheibe 15b ist somit an der Nabenachse 20 gegen Drehbewegung gesichert gehalten, und ist somit ebenfalls bezüglich des Hebelkonus 11 drehfest angeordnet. Es wirkt, wie bereits vorher im Zusammenhang mit der in den Fig. 1 und 2 dargestellten Ausführungsform der erfindungsgemäßen Rücktritts-Bremsnabe, eine Druckfeder 14 zwischen der Kupplungsscheibe 15b und dem Hebelkonus 11, so daß die Kupplungsscheibe 15b wiederum in Richtung auf den Bremskonus 6 zu vorgespannt ist und an einem konischen Anschlag 21 am Drehelement 9 zur Anlage kommt. Der restliche Aufbau der in Fig. 5 dargestellten Rücktritt-Bremsnabe entspricht wiederum dem in den Fig. 1,2 und 3 dargestellten Aufbau einer erfindungsgemäßen Rücktritt-Bremsnabe.

Wenn das Fahrrad in Rückwärtsrichtung geschoben wird, treibt die Habenhülse 2 über die Klinken 8 den Bremskonus 6 in zur normalen Antriebsrichtung des Bremskonus 6 entgegengesetzter Richtung an. Dabei bleiben jedoch die Verzahnung 17 und die Gegenverzahnung 7 außer Eingriff, da das Steilgewinde 10 keine Kraftkomponente entwickelt, die den Bremskonus 6 in axialer Richtug auf die Kupplungsscheibe 15 zu bewegt.

Wird dagegen beim Rückwärtsschieben die Rücktrittbremse betätigt, so kommen die Zähne der Verzahnung 17 und die Zähne der Gegenverzahnung 7 in Eingriff, da der Bremskonus 6 durch das Steilgewinde 10 gegen die Kupplungsscheibe 15,15a oder 15b gedrückt wird. Die Zähne gleiten jedoch an ihren flach abfallenden Flanken 28 aneinander ab mit gleichzeitiger Ausweichbewegung der Kupplungsscheibe 15,15a oder 15b in Richtung auf den Hebelkonus 11 zu, so daß zwischen der Verzahnung 17 und der Gegenverzahnung 7 kein fester Eingriff erzeugt wird.

Durch die Rücktritt-Bremsnabe gemäß der vorliegenden Erfindung ist in einfacher Weise sichergestellt, daß bei Betätigung der Rücktrittbremse insbesondere bei länger anhaltender Bremskrafteinwirkung der Hebelkonus sich nicht entgegen der durch die Friktionsfeder aufgebauten Reibungskraft und der zwischen den ersten und zweiten Konusflächen aufgebauten Reibungskraft verdreht. Ein kurzzeitiges Lösen und Nachstellen der Fahrradpedaldrehstellung ist somit nicht erforderlich. Durch den Aufbau der erfindungsgemäßen Rücktrittbremse wird zusätzlich sichergestellt, daß unabhängig von der momentanen Drehstellung des Bremskonus bezüglich der Kupplungsscheibe beim Einleiten des Bremsvorgangs die Zähne der Verzahnung und der Gegenverzahnung in Eingriff kommen und somit eine optimale Übertragung der Bremskraft über die Pedale bzw. Pedalarme während des gesamten Bremsvorgangs sicherstellen.

## Patentansprüche

1. Rücktrittbremse für Rücktritt-Bremsnaben, insbesondere für Fahrräder, umfassend:
- einen auf einer Nabenachse (20) drehfest angeordneten Hebelkonus (11);
- einen mit dem Hebelkonus (11) drehfest verbundenen, die Nabenachse (20) umgebenden Bremsmantel (3) mit einer ersten Konusfläche (22);
- einen die Nabenachse (20) umgebenden Bremskonus (6) mit einer zweiten, der ersten Konusfläche (22) gegenüberliegenden Konusfläche (24), wobei bei Betätigung der Rücktrittbremse der Bremskonus (6) durch Zusammenwirken mit einem Steilgewinde (10), welches auf einem um die Nabenachse (20) drehbar angeordneten Drehelement (9) vorgesehen ist, axial in Richtung auf den Bremsmantel (3) zu verschoben wird, mit entsprechender gegenseitiger Gleitverschiebung der ersten und zweiten Konusflächen (22,24);
- ein bei Betätigung der Rücktrittbremse zwischen dem Bremskonus (6) und einem bezüglich der Nabenachse (20) drehfest angeordneten Nabenteil wirkendes Reibungselement (5,5a);
- einen die Rücktrittbremsnabe umgebenden Nabenmantel (2),
**gekennzeichnet** durch
ein bezüglich des Hebelkonus drehfest angeordnetes Kupplungselement (15;15a;15b), welches bei Betätigung der Rücktrittbremse in formschlüssigen Eingriff mit dem Bremskonus (6) bringbar ist.

2. Rücktritt-Bremsnabe nach Anspruch 1,
dadurch gekennzeichnet,
daß das Kupplungselement (15;15a;15b) eine mit einer Verzahnung (17) versehende Kupplungsscheibe (15;15a;15b) umfaßt, der eine Gegenverzahnung (7) am Bremskonus (6) zugeordnet ist.

3. Rücktritt-Bremsnabe nach Anspruch 2,
dadurch gekennzeichnet,
daß die Kupplungsscheibe (15;15a;15b) in einer zur Längsrichtung der Nabenachse (20) parallelen Ausweichrichtung entgegen der rücktreibenden Kraft eines Federelements (14) verschiebbar ist.

4. Rücktritt-Bremsnabe nach Anspruch 3,
dadurch gekennzeichnet,
daß die Kupplungsscheibe (15;15a;15b) durch eine Feder (14) axial gegen einen Anschlag (21) in Richtung auf den Bremskonus (6) zu vorgespannt ist.

5. Rücktritt-Bremsnabe nach Anspruch 4,
dadurch gekennzeichnet,
daß der Anschlag (21) eine im wesentlichen konische Anschlagfläche aufweist.

6. Rücktritt-Bremsnabe nach einem der Ansprüche 2 bis 5,
dadurch gekennzeichnet,
daß die Zähne der Verzahnung (17) an der Kupplungsscheibe (15;15a;15b) und der Gegenverzahnung (7) am Bremskonus (6) im Bremszustand der Rücktrittbremse die Verdrehung des Bremskonus (6) in zur Drehrichtung eines Hinterrads entgegengesetzter Drehrichtung verhindern, während die Drehbewegung des Bremskonus (6) in Fahrdrehrichtung durch die Verzahnungen (7,17) nicht behindert ist.

7. Rücktritt-Bremsnabe nach Anspruch 6,
dadurch gekennzeichnet,
daß die Zähne der Verzahnung (17) und/oder die Zähne der Gegenverzahnung (7) sägezahnartig ausgebildet sind.

8. Rücktritt-Bremsnabe nach einem der Ansprüche 2 bis 7,
dadurch gekennzeichnet,
daß die Gegenverzahnung (7) am Bremskonus (6) und die Verzahnung (17) auf der Kupplungsscheibe (15;15a;15b) bereits ineinandergreifen, bevor der Bremskonus (6) den Bremsmantel (3) gegen die Nabenhülse (2) drückt.

9. Rücktritt-Bremsnabe nach einem der Ansprüche 2 bis 8,
dadurch gekennzeichnet,
daß Verzahnung (17) und Gegenverzahnung (7) in einem zwischen der Nabenachse (20) und dem Bremsmantel (3) gebildeten Ringraum angeordnet sind.

10. Rücktritt-Bremsnabe nach einem der Ansprüche 2 bis 9,
dadurch gekennzeichnet,
daß die drehfeste Verbindung zwischen der Kupplungsscheibe (15) und dem Hebelkonus (11) durch ein Kupplungsprofil (16) auf der Kupplungsscheibe (15) gebildet ist, in das wenigstens eine Nase (4) des Bremsmantels (3) eingreift, wobei die wenigstens eine Nase (4) ferner mit entsprechenden Klauen (12,12a) am Hebelkonus (11) zusammenwirkt.

11. Rücktritt-Bremsnabe nach einem der Ansprüche 2 bis 9,
dadurch gekennzeichnet,
daß die drehfeste Verbindung zwischen der Kupplungsscheibe (15a) und dem Hebelkonus (11) durch eine Längsverzahnung (16a) auf der Kupplungsscheibe (15a) und eine am Hebelkonus (11) vorgesehene Längsverzahnung (19) gebildet ist.

12. Rücktritt-Bremsnabe nach Anspruch 11,
dadurch gekennzeichnet,
daß die Längsverzahnung (19) des Hebelkonus (11) an sich im wesentlichen axial erstreckenden Klauen (12a) des Hebelkonus (11) vorgesehen ist.

13. Rücktritt-Bremsnabe nach einem der Ansprüche 2 bis 9,
dadurch gekennzeichnet,
daß die drehfeste Verbindung zwischen der Kupplungsscheibe (15b) und dem Hebelkonus (11) durch ein Formprofil, beispielsweise durch einen Zweiflach (18), auf der Nabenachse (20) gebildet ist, der mit einer entsprechend geformten Öffnung (18a) in der Kupplungsscheibe (15b) zusammenwirkt.

## Claims

1. A back-pedalling brake for back-pedalling brake hubs, in particular for bicycles, comprising:
- a lever cone (11) mounted on a hub axle (20) in a manner precluding relative rotation;
- a brake casing (3) with a first cone surface (22), which brake casing (3) surrounds the hub axle (20) and is connected with the lever cone (11) in a manner precluding relative rotation;
- a brake cone (6) surrounding the hub axle (20) with a second cone surface (24) situated opposite the first cone surface (22), wherein upon actuation of the back-pedalling brake the brake cone (6) is axially displaceable towards the brake casing (3) by cooperation with a coarse thread (10) which is provided on a rotating member (9) rotatably mounted around the hub axle (20), with corresponding mutual sliding displacement of the first and second cone surfaces (22,24);
- a friction member (5,5a) acting upon actuation of the back-pedalling brake between the brake cone (6) and a hub part mounted in a manner precluding relative rotation in relation to the hub axle (20);
- a hub casing (2) surrounding the back-pedalling brake hub,
characterised by a coupling member (15;15a;15b) which is mounted in a manner precluding relative rotation in relation to the lever cone and which can be brought into form-locking engagement with the brake cone (6) upon actuation of the back-pedalling brake.

2. A back-pedalling brake hub according to Claim 1, characterised in that the coupling member (15;15a;15b) comprises a coupling disc (15;15a;15b) provided with a toothing (17), with which is associated a counter-toothing (7) on the brake cone (6).

3. A back-pedalling brake hub according to Claim 2, characterised in that the coupling disc (15;15a;15b) is displaceable against the repelling force of a spring element (14) in a deflection direction parallel to the longitudinal direction of the hub axle (20).

4. A back-pedalling brake hub according to Claim 3, characterised in that the coupling disc (15;15a;15b) is to be preloaded by a spring (14) axially against a stop member (21) towards the brake cone (6).

5. A back-pedalling brake hub according to Claim 4, characterised in that the stop member (21) has a substantially conical stop surface.

6. A back-pedalling brake hub according to any one of Claims 2 to 5, characterised in that the teeth of the toothing (17) on the coupling disc (15;15a;15b) and the counter-toothing (7) on the brake zone (6) prevent in the braking condition of the back-pedalling brake the rotation of the brake cone (6) in a direction of rotation opposed to the direction of rotation of a rear wheel, whereas the rotational movement of the brake cone (6) in the direction of travel rotation is not prevented by the sets teeth (7,17).

7. A back-pedalling brake hub according to Claim 6, characterised in that the teeth of the toothing (17) and/or the teeth of the counter-toothing (7) are of sawtooth-like conformation.

8. A back-pedalling brake hub according to any one of Claims 2 to 7, characterised in that the counter-toothing (7) on the brake cone (6) and the toothing (17) on the coupling disc (15;15a;15b) already engage in one another before the brake cone (6) presses the brake casing (3) against the hub shell (2).

9. A back-pedalling brake hub according to any one of Claims 2 to 8, characterised in that the toothing (17) and the counter-toothing (7) are disposed in an annular chamber formed between the hub axle (20) and the brake casing (3).

10. A back-pedalling brake hub according to any one of Claims 2 to 9, characterised in that the connection precluding relative rotation between the coupling disc (15) and the lever cone (11) is formed by a coupling profile (16) on the coupling disc (15), in which engages at least one lug (4) of the brake casing (3), wherein the at least one lug (4) also co-operates with corresponding dogs (12,12a) on the lever cone (11).

11. A back-pedalling brake hub according to any one of Claims 2 to 9, characterised in that the connection precluding relative rotation between the coupling disc (15a) and the lever cone (11) is formed by a longitudinal toothing (16a) on the coupling disc (15a) and by a longitudinal toothing (19) provided on the lever cone (11).

12. A back-pedalling brake hub according to Claim 11, characterised in that the longitudinal toothing (19) of the lever cone (11) is provided on substantially axially extending dogs (12a) of the lever cone (11).

13. A back-pedalling brake hub according to any one of Claims 2 to 9, characterised in that the connection precluding relative rotation between the coupling disc (15b) and the lever cone (11) is formed by a shaped profile, for example by a double flat (18) on the hub axle (20), which co-operates with a correspondingly formed opening (18a) in the coupling disc (15b).

## Revendications

1. Frein à rétropédalage pour moyeux de frein à rétropédalage, en particulier destiné à des bicyclettes, comprenant :
- un cône-levier (11) monté non tournant sur un axe de moyeu (20) ;
- une bague de frein (3) montée liée en rotation avec le cône-levier (11), entourant l'axe de moyeu (20) et présentant une première face conique (22) ;
- un cône-frein (6) entourant l'axe de moyeu (20), présentant une deuxième face conique (24) située en regard de la première face conique (22), le cône-frein (6), lorsque le frein à rétropédalage est actionné, en coopérant avec un filetage à pas rapide (10) qui est prévu sur un élément tournant (9) monté tournant autour de l'axe de moyeu (20), étant déplacé axialement en direction de la bague de frein (3), avec un glissement opposé correspondant des première et deuxième faces coniques (22, 24) ;
- un élément de friction (5, 5a) agissant, lorsque le frein à rétropédalage est actionné, entre le cône-frein (6) et une partie de moyeu montée non tournante par rapport à l'axe de moyeu (20) ;
- une bague de moyeu (2) entourant le moyeu du frein à rétropédalage,
caractérisé par
un élément d'embrayage (15 ; 15a ; 15b), monté non tournant par rapport au cône-levier, qui, lorsque le frein à rétropédalage est actionné, est susceptible de venir coopérer par complémentarité de formes avec le cône-frein (6).

2. Moyeu de frein à rétropédalage selon la revendication 1, caractérisé en ce que l'élément d'embrayage (15 ; 15a ; 15b) comprend un disque d'embrayage (15 ; 15a ; 15b) pourvu d'une denture (17), à laquelle est associée une contre-denture (7) présente sur le cône-frein (6).

3. Moyeu de frein à rétropédalage selon la revendication 2, caractérisé en ce que le disque d'embrayage (15 ; 15a ; 15b) est déplaçable dans une direction d'évitement parallèle à la direction longitudinale de l'axe de moyeu (20), à l'encontre de la force de rétropropulsion d'un élément élastique (14).

4. Moyeu de frein à rétropédalage selon la revendication 3, caractérisé en ce que le disque d'embrayage (15 ; 15a ; 15b) est précontraint par un ressort (14) axialement contre une butée (21), en direction du cône-frein (6).

5. Moyeu de frein à rétropédalage selon la revendication 4, caractérisé en ce que la butée (21) présente une surface de butée sensiblement conique.

6. Moyeu de frein à rétropédalage selon l'une des revendications 2 à 5, caractérisé en ce que les dents de la denture (17) présente sur le disque d'embrayage (15 ; 15a ; 15b) et de la contre-denture (7) présente sur le cône-frein (6), lorsque le frein à rétropédalage est en état de freinage, empêchent la rotation du cône-frein (6) dans la direction opposée au sens de rotation d'une roue arrière, tandis que le mouvement de rotation du cône-frein (6) dans le sens de rotation de la marche n'est pas empêché par les dentures (7, 17).

7. Moyeu de frein à rétropédalage selon la revendication 6, caractérisé en ce que les dents de la denture (17) et/ou les dents de la contre-denture (7) présentent une forme en dents de scie.

8. Moyeu de frein à rétropédalage selon l'une des revendications 2 à 7, caractérisé en ce que la contre-denture (7) présente sur le cône-frein (6) et la denture (17) présente sur le disque d'embrayage (15 ; 15a ; 15b) sont déjà en prise l'une avec l'autre avant que le cône-frein (6) n'appuie la bague de frein (3) contre la douille de moyeu (2).

9. Moyeu de frein à rétropédalage selon l'une des revendications 2 à 8, caractérisé en ce que la denture (17) et la contre-denture (7) sont disposées dans un espace annulaire formé entre l'axe de moyeu (20) et la bague de frein (3).

10. Moyeu de frein à rétropédalage selon l'une des revendications 2 à 9, caractérisé en ce que la liaison en rotation entre le disque d'embrayage (15) et le cône-levier (11) est formée par un profil d'embrayage (16) prévu sur le disque d'embrayage (15), dans lequel s'engage au moins un bec (4) de la bague de frein (3), le bec (4), au nombre minimum d'un, coopérant, en outre, avec des griffes (12, 12a) correspondantes prévues sur le cône-levier (11).

11. Moyeu de frein à rétropédalage selon l'une des revendications 2 à 9, caractérisé en ce que la liaison en rotation entre le disque d'embrayage (15a) et le cône-levier (11) est formée par une denture longitudinale (16a) présente sur le disque d'embrayage (15a) et par une denture longitudinale (19) prévue sur le cône-levier (11).

12. Moyeu de frein à rétropédalage selon la revendication 11, caractérisé en ce que la denture longitudinale (19) du cône-levier (11) est prévue sur des griffes (12a) du cône-levier (11) s'étendant sensiblement axialement.

13. Moyeu de frein à rétropédalage selon l'une des revendications 2 à 9, caractérisé en ce que la liaison en rotation entre le disque d'embrayage (15b) et le cône-levier (11) est assurée par un profil à forme particulière, par exemple une partie à deux plats opposés (18), prévu sur l'axe de moyeu (20), qui coopère avec une ouverture (18a) ménagée de façon correspondante dans le disque d'embrayage (15b).
